# EUROPÄISCHE PATENTSCHRIFT

(11) **EP 1 438 208 B1**
(45) Veröffentlichungstag und Bekanntmachung des Hinweises auf die Patenterteilung: **03.05.2006**
(21) Anmeldenummer: 02776678.1
(22) Anmeldetag: 17.09.2002
(51) Int. Cl.: B60K 31/00

(54) **GESCHWINDIGKEITSREGLER MIT ANZEIGEEINRICHTUNG**
SPEED REGULATOR WITH DISPLAY DEVICE
REGULATEUR DE VITESSE A SYSTEME D'AFFICHAGE

(30) Priorität: 05.10.2001 DE 10149090
(43) Veröffentlichungstag der Anmeldung: 21.07.2004
(73) Patentinhaber: ROBERT BOSCH GMBH, 70442 Stuttgart (DE)
(72) Erfinder: SCHERL, Michael, 74321 Bietigheim (DE); UHLER, Werner, 76646 Bruchsal (DE)
(86) Internationale Anmeldenummer: PCT/DE2002/003481
(87) Internationale Veröffentlichungsnummer: WO 2003/031216

(56) Entgegenhaltungen:
- WO-A-00/32435
- DE-A- 4 338 098
- DE-A- 19 958 520

## Beschreibung

Die Erfindung betrifft einen Geschwindigkeitsregler für Kraftfahrzeuge, mit einem Standardmodus, in dem auf eine vom Fahrer eingestellte Wunschgeschwindigkeit geregelt wird, und mindestens einem Ausnahmemodus, in dem auf eine Sollgeschwindigkeit geregelt wird, die von der Wunschgeschwindigkeit abweichen kann, und mit einer Anzeigeeinrichtung zur Anzeige der Wunschgeschwindigkeit.

### Stand der Technik

Solche Geschwindigkeitsregler ermöglichen es, die Geschwindigkeit des Fahrzeugs auf eine vom Fahrer gewählte Wunschgeschwindigkeit zu regeln. Wenn die Sensoreinrichtung auch einen Abstandssensor aufweist, beispielsweise in der Form eines Radarsensors, eines Stereo-Kamerasystems oder dergleichen, kann die Fahrzeuggeschwindigkeit auch so geregelt werden, daß automatisch ein geeigneter Sicherheitsabstand zu einem vorausfahrenden Fahrzeug eingehalten wird. Ein Beispiel eines solchen Regelsystems, das auch als ACC-System (Active Cruise Control) bekannt ist, wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996.

Aus der DE 199 58 520 Al ist ein Geschwindigkeitsregler gemäß dem Oberbegriff des Anspruch bekannt, der nicht nur ab einer bestimmten Mindestgeschwindigkeit die Fahrgeschwindigkeit des Fahrzeugs regelt, sondern auch bei Geschwindigkeiten unterhalb einer vorgegebenen Grenzgeschwindigkeit bis hin zum Stillstand des Fahrzeugs. Durch Erfassung der Verkehrssituation durch einen Abstandssensor kann auch ein automatisches Anfahren des Fahrzeugs erfolgen, wenn der Fahrer auf einen entsprechenden Anfahrhinweis reagiert hat Der Anfahrhinweis ist bis zu einer vorgegebenen Grenzzeit wirksam, kann alternativ jedoch auch wiederholt werden. In jeder Verkehrssituation hat der Fahrer jedoch die Möglichkeit durch Betätigen von Gas- oder Bremspedal den Geschwindigkeitsregler zu übersteuern.

Aus der WO 00/32435 ist ein Geschwindigkeitsregler für ein Fahrzeug bekannt, der mit dem Motorsteuerungssystem des Fahrzeugs verbunden ist und das derart ausgestaltet ist, dass die Fahrzeuggeschwindigkeit des Fahrzeugs in Abhängigkeit der Eingaben des Geschwindigkeitsreglers geändert werden kann. Der Geschwindigkeitsregler beinhaltet Mittel zur Messung der Fahrzeuggeschwindigkeit, Mittel zum Eingeben und Setzen einer gewünschten Geschwindigkeit durch den Fahrer eine Geschwindigkeitsregelanzeige um dem Fahrer die in etwa gleiche Geschwindigkeit anzuzeigen, die der gewünschten Geschwindigkeit entspricht und um ein Geschwindigkeitsinkrement gerundet wurde, eine Tachometeranzeige um dem Fahrer die gemessene Fahrzeuggeschwindigkeit und die in etwa gleiche Geschwindigkeit anzuzeigen. Der Geschwindigkeitsregler korrigiert, falls erforderlich die vom fahrer eingegebene Geschwindigkeit auf einen Wert, so dass zwischen der vom Fahrer gewünschten Geschwindigkeit und der angezeigten Geschwindigkeit kein Unterscheid besteht.

Da jedoch mit den verfügbaren Sensoreinrichtungen eine vollständige Erfassung und sichere Bewertung des Verkehrsumfeldes noch nicht möglich ist, eignen sich diese Systeme bisher vor allem für relativ stabile Verkehrssituationen wie z.B. das Fahren auf einer Autobahn oder Schnellstraße. Im innerstädtischen Verkehr oder bei Fahrten mit niedriger Geschwindigkeit auf kurvenreichen Strecken könnten dagegen die Unsicherheiten bei der Erfassung des jeweils relevanten Zielobjektes zu einem Unfallrisiko führen. Aus diesem Grund sind bekannte ACC-Systeme bisher so ausgelegt, daß sie sich nur oberhalb einer bestimmten Grenzgeschwindigkeit aktivieren lassen.

Es ist bereits vorschlagen worden, den Anwendungsbereich des ACC-Systems auf eine Verkehrssituation zu erweitern, die als stop & Go Verkehr bezeichnet wird und die beispielsweise bei einem Verkehrsstau oder bei zähflüssigem Verkehr auftritt. Auch diese Verkehrssituation ist relativ stabil und eignet sich daher für eine automatische Abstandsregelung. Allerdings muß die Funktionalität so erweitert werden, daß auch Anfahr- und Anhaltevorgänge automatisch gesteuert werden können.

Außerdem sollte der Anwendungsbereich dieser Stop and Go Funktion auf Geschwindigkeiten unterhalb eines bestimmten Wertes begrenzt werden, wobei sich die Geschwindigkeitsbereiche für die ACC-Funktion und Stop & Go Funktion überlappen können.

Wenn der Fahrer bei einem Verkehrsstau die Stop & Go Funktion aktiviert, ist es zweckmäßig, die zuvor für den Standardmodus gewählte Wunschgeschwindigkeit gespeichert zu halten, damit der Fahrer, nachdem sich der Stau aufgelöst hat, durch Eingabe eines einfachen Tastenbefehls (resume) wieder auf die frühere Wunschgeschwindigkeit beschleunigen kann.

Solange die Stop & Go Funktion aktiv ist, kann jedoch das Fahrzeug nicht über die für diese Funktion geltende Grenzgeschwindigkeit hinaus beschleunigt werden. Wenn sich in Folge der Auflösung des Staus der Abstand zu dem vorausfahrenden Fahrzeug vergrößert, regelt der Geschwindigkeitsregler die Fahrzeuggeschwindigkeit auf einen Sollwert, der der zugelassenen Grenzgeschwindigkeit für die Stop & Go Funktion entspricht, beispielsweise auf 50 km/h. Erst wenn der Fahrer aktiv den Befehl gibt, die Stop & Go Funktion auszuschalten und wieder zum Standardmodus oder zur ACC-Funktion zurückzukehren, kann wieder auf die alte Wunschgeschwindigkeit beschleunigt werden.

Es können somit Situation eintreten, in denen die Sollgeschwindigkeit, auf die tatsächlich geregelt wird, von der vom Fahrer eingestellten Wunschgeschwindigkeit abweicht. Dies kann zu einer Irritation des Fahrers führen.

### Aufgabe, Lösung und Vorteile der Erfindung

Aufgabe der Erfindung ist es deshalb, einen Geschwindigkeitsregler mit Anzeigeeinrichtung zu schaffen, bei dem das tatsächliche Verhalten des Geschwindigkeitsreglers für den Fahrer transparent gemacht wird.

Diese Aufgabe wird erfindungsgemäß gelöst, durch die Merkmale des Anspruchs 1.

Wenn der Fahrer feststellt, daß die von ihm eingestellte Wunschgeschwindigkeit wider Erwarten nicht eingehalten oder wiederhergestellt wird, läßt die Zusatzanzeige den Grund für dieses unerwartete Verhalten erkennen, so daß der Fahrer angemessen auf diese Situation reagieren kann, beispielsweise, indem er wieder von der Stop & Go-Funktion auf die ACC-Funktion umschaltet.

Eine Abweichung zwischen der Sollgeschwindigkeit und der Wunschgeschwindigkeit kann auch in anderen Situationen als der oben geschilderten auftreten, beispielsweise dann, wenn der Fahrer während des Stop & Go-Betriebs versucht, die Wunschgeschwindigkeit über die für die Stop & Go-Funktion zugelassene Grenzgeschwindigkeit zu erhöhen oder wenn er, nachdem der Geschwindigkeitsregler vorübergehend abgeschaltet war, die Stop & Go-Funktion mit Hilfe des Resume-Befehls wieder aktiviert, die noch gespeicherte Wunschgeschwindigkeit aber über der erlaubten Grenzgeschwindigkeit liegt.

Die Betriebsmodi, in denen nicht direkt auf die Wunschgeschwindigkeit, sondern auf eine möglicherweise abweichende Sollgeschwindigkeit geregelt wird, sollen zusammenfassend als "Ausnahmemodi" bezeichnet werden. Zu diesen Ausnahmemodi kann im weiteren Sinne auch die Abstandsregelung im Rahmen der ACC-Funktion gerechnet werden, da bei dieser Abstandsregelung die Sollgeschwindigkeit durch die Geschwindigkeit des vorausfahrenden Fahrzeugs bestimmt wird und in der Regel kleiner ist als die vom Fahrer gesetzte Wunschgeschwindigkeit.

Vorteilhafte Ausgestaltungen der Erfindung ergeben sich aus den Unteransprüchen.

In einer besonders bevorzugten Ausführungsform wird durch die Zusatzanzeige die Sollgeschwindigkeit quantitativ angezeigt. Da vorzugsweise auch die gesetzte Wunschgeschwindigkeit quantitativ angezeigt wird, sollten die Anzeigen für die Soll- und die Wunschgeschwindigkeit optisch unterscheidbar sein, damit Verwechslungen vermieden werden.

Bevorzugt ist die Anzeigeeinrichtung so in den Fahrgeschwindigkeitsanzeiger auf dem Armaturenbrett integriert, daß sowohl die Wunschgeschwindigkeit als auch die Sollgeschwindigkeit durch das Aufleuchten von Signallampen, z.B. Leuchtdioden, an den Postitionen in der Geschwindigkeitsskala signalisiert wird, die den betreffenden Geschwindigkeiten entsprechen. Die Unterscheidung zwischen Soll- und Wunschgeschwindigkeit kann dann beispielsweise dadurch erreicht werden, daß die Leuchtdiode für die Sollgeschwindigkeit blinkt oder weniger hell ist oder eine andere Farbe hat als die Leuchtdiode für die Wunschgeschwindigkeit.

Sofern als Sollgeschwindigkeit nur eine einzige feste Geschwindigkeit in Frage kommt, beispielsweise die festliegende obere Grenzgeschwindigkeit für die Stop & Go-Funktion, kann die Zusatzanzeige durch eine einzige Leuchtdiode gebildet werden, die an der entsprechenden Stelle in den Fahrgeschwindigkeitsanzeiger integriert ist. Falls für die Sollgeschwindigkeit unterschiedliche Werte in Frage kommen, kann die Zusatzanzeige durch mehrere auf der Geschwindigkeitsskala der Fahrgeschwindigkeitsanzeige verteilte Leuchtdioden gebildet werden. Gegebenenfalls können für die Zusatzanzeige dieselben Leuchtdioden wie für die Anzeige der variablen Wunschgeschwindigkeit benutzt werden, wobei eine Unterscheidung durch Ansteuerung der Leuchtdioden mit unterschiedlicher Helligkeit, blinkend oder nicht blinkend oder mit unterschiedlicher Blinkfrequenz ermöglicht wird.

Alternativ ist auch eine numerische Anzeige der Sollgeschwindigkeit denkbar.

Eine quantitative Anzeige der Sollgeschwindigkeit bietet auch im Rahmen der Abstandsregelung verschiedene Vorteile. Wenn das Fahrzeug zum Beispiel mit der gesetzten Wunschgeschwindigkeit auf ein langsameres vorausfahrendes Fahrzeug auffährt, so wird der Geschwindigkeitsregler die Sollgeschwindigkeit allmählich auf die Geschwindigkeit des vorausfahrenden Fahrzeugs reduzieren. Da jedoch der Geschwindigkeitsregler nur ein begrenztes Verzögerungsvermögen hat, wird die Sollgeschwindigkeit der tatsächlichen, durch die Tachonadel angezeigten Geschwindigkeit vorauseilen. Die Anzeige der Sollgeschwindigkeit ermöglicht es dann dem Fahrer, die Geschwindigkeit des vorausfahrenden Fahrzeugs früher abzuschätzen, so daß ihm die Entscheidung erleichtert wird, hinter dem vorausfahrenden Fahrzeug zu bleiben oder zum Überholen anzusetzen. Darüber hinaus kann die Anzeige der Sollgeschwindigkeit auch die Transparenz in den Fällen erhöhen, in denen der Geschwindigkeitsregler fälschlich ein auf der Nachbarspur fahrendes Fahrzeug als Zielobjekt erkennt, beispielsweise weil der Fahrer des eigenen Fahrzeugs sich relativ weit in Richtung auf diese Nachbarspur von der Mitte der eigenen Fahrspur entfernt hat. Der Wechsel des Zielobjektes ist dann an einer plötzlichen Abnahme der Sollgeschwindigkeit erkennbar.

Im Rahmen der Stop & Go-Funktion ist es zweckmäßig, unter bestimmten, durch Sensoren erfaßbaren Bedingungen, beispielsweise bei einem Abbiegevorgang, eine Übernahmeaufforderung an den Fahrer auszugeben und, wenn der Fahrer dieser Aufforderung nicht innerhalb einer gewissen Zeitspanne folgt, die Geschwindigkeit zwangsweise auf eine sehr niedrige Geschwindigkeit, beispielsweise auf 10 km/h, herunterzuregeln, damit eine Gefährdung von Verkehrsteilnehmern beim Einbiegen in die neue Straße vermieden wird. Auch diese Situation kann durch die Anzeige der dann sehr niedrigen Sollgeschwindigkeit von 10 km/h transparent gemacht werden.

### Zeichnung

Im folgenden werden Ausführungsbeispiele der Erfindung an der Zeichnung erläutert.

Es zeigen:
- Figur 1: ein Blockdiagramm des Geschwindigkeitsreglers und zugehöriger Bedienungs- und Anzeigeelemente;
- Figur 2: ein Diagramm zur Erläuterung von Geschwindigkeitsbereichen, in denen verschiedene Funktionen des Geschwindigkeitsreglers anwendbar sind; und
- Figur 3: eine Anzeigeeinrichtung, die in einen Fahrgeschwindigkeitsanzeiger auf dem Armaturenbrett des Kraftfahrzeugs integriert ist.

### Beschreibung von Ausführungsbeispielen

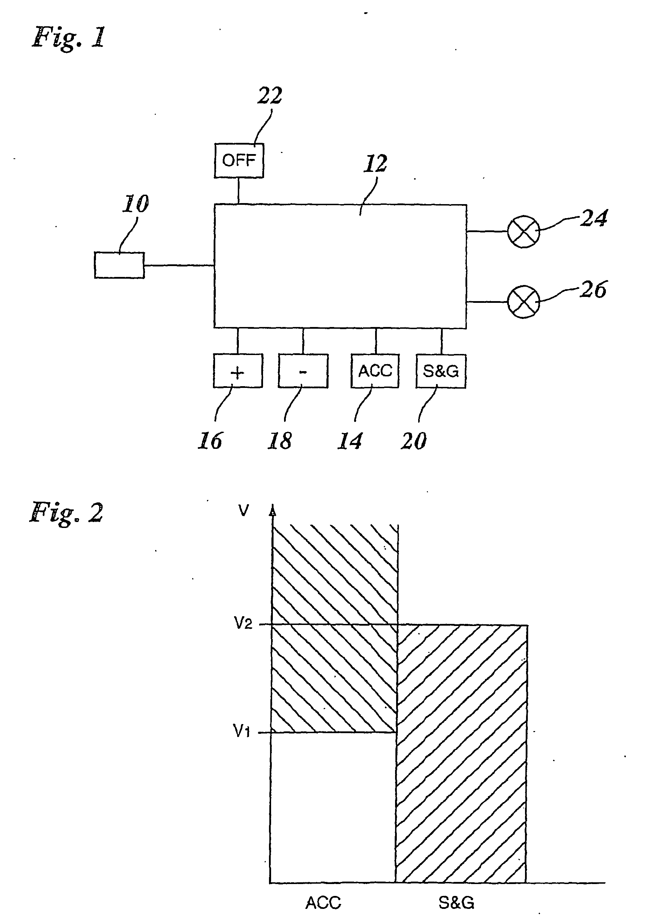

Da der Aufbau und die Wirkungsweise eines Geschwindigkeitsreglers mit ACC-Funktion bekannt sind, zeigt Figur 1 lediglich die wichtigsten Komponenten in einem Blockdiagramm. Eine Sensoreinrichtung umfaßt einen Abstandssensor 10, beispielsweise einen Radarsensor, der den Abstand und die Relativgeschwindigkeit eines vorausfahrenden Fahrzeugs mißt. Sofern von dem Radarsensor mehrere Zielobjekte erfaßt werden, beispielsweise mehrere Fahrzeuge oder auch Standziele wie Straßenschilder und dergleichen, wird durch Plausibilitätsauswertung dasjenige Zielobjekt ausgewählt, daß durch das unmittelbar vorausfahrende Fahrzeug gebildet wird.

Zu der Sensoreinrichtung gehören außerdem noch bekannte Sensoren, beispielsweise einen Fahrgeschwindigkeitssensor, Beschleunigungssensoren zur Erfassung der Längsbeschleunigung und der Querbeschleunigung, ein Giergeschwindigkeitssensor und dergleichen, die ohnehin in Fahrzeug vorhanden sind und deren Signale auch für andere Regelungszwecke genutzt werden. Die Signale des Abstandssensors und der übrigen Sensoren werden in einer elektronischen Steuereinrichtung 12 ausgewertet, die beispielsweise durch einen Mikrocomputer gebildet wird. Die Steuereinrichtung 12 wirkt auf das Antriebs- und Bremssystem des Fahrzeugs ein, um die Fahrgeschwindigkeit entweder auf eine vom Fahrer gewählte Wunschgeschwindigkeit (Standardmodus) oder auf einen geeigneten Abstand zum vorausfahrenden Fahrzeug zu regeln.

Diese Regelfunktion, im folgenden als ACC-Funktion bezeichnet, wird vom Fahrer durch Betätigen einer ACC-Taste 14 aktiviert. Wenn bereits früher eine Wunschgeschwindigkeit gespeichert war, hat das Betätigen der ACC-Taste die Funktion, daß die Regelung auf diese Wunschgeschwindigkeit wieder aufgenommen wird ("resume"). Andernfalls wird die Wunschgeschwindigkeit gesetzt, indem der Fahrer kurzzeitig eine Taste 16 betätigt, nachdem das Fahrzeug die gewünschte Geschwindigkeit erreicht hat. Weitere oder anhaltende Betätigung der Taste 16 bewirkt eine schrittweise Erhöhung der Wunschgeschwindigkeit. Entsprechend bewirkt die Betätigung einer Taste 18 eine schrittweise Absenkung der Wunschgeschwindigkeit.

Die ACC-Funktion schaltet sich selbsttätig aus, sobald die Geschwindigkeit des Fahrzeugs einen bestimmten Wert V₁ von beispielsweise 40 km/h unterschreitet. Sobald die Geschwindigkeit unterhalb eines größeren Wertes V₂ liegt, der beispielsweise 50 km/h beträgt, kann der Fahrer jedoch durch Betätigen einer Taste 20 eine Stop & Go Funktion aktivieren. Von dieser Möglichkeit wird der Fahrer beispielsweise dann Gebrauch machen, wenn er auf ein Stauende auffährt. Die Stop & Go Funktion bewirkt dann, daß das Fahrzeug automatisch in einem passenden Abstand vor dem Stauende zum Stillstand gebracht wird. Wenn das vor dem eigenen Fahrzeug haltende Fahrzeug ein Stück vor fährt, bewirkt die Stop & Go Funktion, daß das eigene Fahrzeug automatisch anfährt und seinerseits ein entsprechendes Stück vor fährt. Die Geschwindigkeit des eigenen Fahrzeugs wird dabei automatisch auf die Geschwindigkeit V₂ oder eine kleinere, vom Fahrer mit Hilfe der Tasten 16 und 18 gewählte Wunschgeschwindigkeit begrenzt. Es soll hier jedoch angenommen werden, daß die Wunschgeschwindigkeit nicht kleiner als V₁ gewählt werden kann.

Mit einer Taste 22 kann der Geschwindigkeitsregler deaktiviert werden, unabhängig davon, ob gerade die Stop & Go Funktion oder die ACC-Funktion aktiv ist.

Figur 2 illustriert die Geschwindigkeitsbereiche, in denen die ACC-Funktion und die Stop & Go Funktion aktivierbar sind. In dem Geschwindigkeitsbereich zwischen V₁ und V₂ sind beide Funktion aktivierbar, doch schließen sich die beiden Funktionen gegenseitig aus.

Das Aufleuchten einer Anzeigelampe 24 (Figur 1) zeigt an, daß die ACC-Funktion aktiv ist. Diese Anzeigelampe 26 weist einen Zwischenzustand zwischen dem eingeschalteten und dem ausgeschalteten Zustand auf. Dieser Zwischenzustand wird beispielsweise dadurch gebildet, daß die Lampe schwächer aufleuchtet, einen Farbumschlag zeigt oder daß lediglich eine Umrahmung der Lampe aufleuchtet, und zeigt an, daß die ACC-Funktion aktivierbar aber nicht aktiv ist. Entsprechend zeigt ein Aufleuchten oder ein Zwischenzustand einer Anzeigelampe 26 an, daß die Stop & Go Funktion aktiv bzw. aktivierbar ist.

Durch Betätigen des Gaspedals kann der Fahrer sowohl die ACC-Funktion als auch die Stop & Go Funktion übersteuern, um vorübergehend auf eine höhere Geschwindigkeit zu beschleunigen. Die Betätigung des Bremspedals hat dagegen ebenso wie die Betätigung der Taste 22 die Funktion, den Geschwindigkeitsregler zu deaktivieren. Wenn der Fahrer selbst das Fahrzeug zum Stillstand abgebremst hat, kann die Stop & Go Funktion nicht aus dem Stand wieder aktiviert werden, sondern erst nachdem der Fahrer selbst das Fahrzeug durch Betätigen des Gaspedals wieder in Bewegung gesetzt hat.

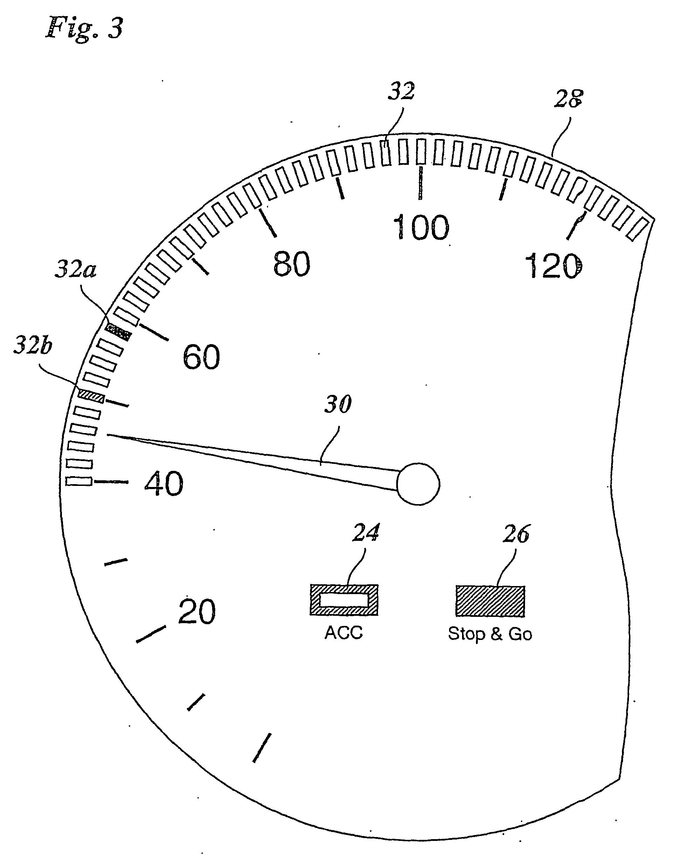

Figur 3 zeigt einen Fahrgeschwindigkeitsanzeiger 28, wie sie üblicherweise auf dem Armaturenbrett eines Kraftfahrzeugs angeordnet ist. Der Fahrgeschwindigkeitsanzeiger 28 weist wie üblich eine Geschwindigkeitsskala und eine Tachonadel 30 auf und enthält auch die bereits erwähnten Anzeigelampen 24 und 26 für die ACC-Funktion und die Stop & Go-Funktion.

Im gezeigten Beispiel beträgt die aktuelle Fahrgeschwindigkeit 46 km/h, und sie liegt damit zwischen der Geschwindigkeit V₁ von 40 km/h und der Geschwindigkeit V₂ von 50 km/h, so daß sowohl die ACC-Funktion als auch die Stop & Go-Funktion aktiv sein könnten. Hier ist angenommen worden, daß die Stop & Go-Funktion aktiv ist, so daß die Anzeigelampe 26 voll eingeschaltet ist, während bei der Anzeigelampe 24 nur ein Rahmen aufleuchtet. Hierdurch wird angezeigt, daß die ACC-Funktion zwar aktivierbar aber nicht aktiv ist.

Zu der Anzeigeeinrichtung des Geschwindigkeitsreglers gehört weiterhin eine Vielzahl von Leuchtdioden 32, die in dem Geschwindigkeitsbereich ab 40 km/h gleichmäßig mit einer Auflösung von 2 km/h über die Geschwindigkeitsskala verteilt sind. Das Aufleuchten einer dieser Leuchtdioden 32 gibt die Wunschgeschwindigkeit an, die mit Hilfe einer der Tasten 16, 18 gesetzt wurde. Im gezeigten Beispiel beträgt die gesetzte Wunschgeschwindigkeit 58 km/h, und dementsprechend leuchtet die dieser Geschwindigkeit zugeordnete Leuchtdiode 32a auf. Da jedoch nicht die ACC-Funktion, sondern die Stop & Go-Funktion aktiv ist; steigt die Fahrzeuggeschwindigkeit auch dann nicht über 50 km/h (V₂) an, wenn die Verkehrssituation höhere Geschwindigkeiten zuläßt. Das heißt, sofern keine Abstandsregelung erforderlich ist, wird auf eine Sollgeschwindigkeit von 50 km/h geregelt. Dieser Sachverhalt wird hier dadurch angezeigt, daß die der Sollgeschwindigkeit von 50 km/h entsprechende Leuchtdiode (Zusatzanzeige) 32b aufleuchtet. Diese Leuchtdiode wird jedoch so angesteuert, daß ihre Helligkeit geringer ist als die der Leuchtdiode 32a.

Sofern die Straße frei ist, wird sich die Tachonadel bei 50 km/h einpendeln. Wenn der Fahrer wieder auf die Wunschgeschwindigkeit von 58 km/h beschleunigen möchte, zeigt ihm das Aufleuchten der Leuchtdiode 32b an, daß er die Taste 14 betätigen muß, um von der Stop & Go-Funktion auf die ACC-Funktion umzuschalten. Wenn der Fahrer die Taste 14 betätigt, leuchtet die Anzeigelampe 24 voll auf, und gleichzeitig erlischt die Leuchtdiode 32b. Bei der Anzeigelampe 26 leuchtet nur ein Rahmen auf, solange die Geschwindigkeit noch kleiner ist als 50 km/h und somit die Stop & Go-Funktion aktiviert werden kann. Wenn die Geschwindigkeit über 50 km/h ansteigt, erlischt die Anzeigelampe 26 vollständig.

Wie Figur 3 zeigt, kann auch eine Wunschgeschwindigkeit in dem Geschwindigkeitsbereich zwischen 40 und 50 km/h gesetzt werden. Dies wird dann durch das helle Aufleuchten der entsprechenden Leuchtdiode 32 angezeigt. In diesem Geschwindigkeitsbereich kann die Wunschgeschwindigkeit sowohl im ACC-Modus als auch im Stop & Go-Modus gesetzt werden. Die Leuchtdiode 32b ist in beiden Fällen vollständig ausgeschaltet, es sei denn, daß die gesetzte Wunschgeschwindigkeit gerade 50 km/h beträgt. Wenn der Fahrer durch Betätigen und Halten der Taste 16 die Wunschgeschwindigkeit schrittweise erhöht, verlagert die Position der eingeschalteten Leuchtdiode 32a nach und nach zu höheren Geschwindigkeiten, und das Fahrzeug wird entsprechend beschleunigt. Wenn jedoch im Stop & Go-Modus die Wunschgeschwindigkeit über 50 km/h erhöht wird, leuchtet zusätzlich wieder die Leuchtdiode 32b auf, und die Geschwindigkeit wird auf 50 km/h gehalten, bis der Fahrer wieder die Taste 14 betätigt.

Diese Funktionalität kann vom Fahrer zum Beispiel auf folgende Weise genutzt werden. Wenn der Geschwindigkeitsregler im Stop & Go-Modus ist und das Fahrzeug in diesem Modus einen Streckenabschnitt erreicht, in dem eine Geschwindigkeitsbeschränkung von beispielsweise 60 km/h besteht, so kann der Fahrer vorbeugend mit Hilfe der Taste 16 die Wunschgeschwindigkeit auf 60 km/h erhöhen um sicherzustellen, daß er nicht gegen die Geschwindigkeitsbeschränkung verstößt. Wenn sich dann - ggf. erst nach längerer Zeit - der Stau auflöst und der Fahrer in den ACC-Modus umschaltet, bleibt die Geschwindigkeit auf 60 km/h begrenzt, auch wenn der Fahrer inzwischen vergessen hat, daß eine Geschwindigkeitsbeschränkung besteht.

Im hier beschriebenen Beispiel ist angenommen worden, daß die Stop & Go-Funktion nur aktiviert werden kann, wenn die Fahrzeuggeschwindigkeit kleiner ist als V2, also nicht mehr als 50 km/h beträgt. In einer modifizierten Ausführungsform kann der Geschwindigkeitsregler jedoch so ausgelegt sein, daß das Umschalten auf die Stop & Go-Funktion unter bestimmten Bedingungen auch bei höherer Geschwindigkeit zugelassen wird. Wenn das Fahrzeug beispielsweise mit einer Geschwindigkeit von mehr als 50 km/h auf ein Stauende auffährt, so erkennt der Geschwindigkeitsregler anhand der gemessenen Relativgeschwindigkeit des vorausfahrenden Fahrzeugs und anhand der Eigengeschwindigkeit, daß die Absolutgeschwindigkeit des vorausfahrenden Fahrzeugs weniger als 50 km/h beträgt. Es ist daher absehbar, daß auch die Geschwindigkeit des eigenen Fahrzeugs auf 50 km/h oder weniger abnehmen wird. Unter diesen Bedingungen kann das Umschalten auf die Stop & Go-Funktion ausnahmsweise schon dann zugelassen werden, wenn die Geschwindigkeit noch mehr als 50 km/h beträgt. Dies wird dann dadurch angezeigt, daß bei der Anzeigelampe 26 ein Rahmen aufleuchtet. Wenn dann der Fahrer die Taste 20 betätigt, um die Stop & Go-Funktion zu aktivieren, leuchtet die Leuchtdiode 32b schwach auf, und die Geschwindigkeit wird auf maximal 50 km/h heruntergeregelt.

Die Leuchtdiode 32a, die die eingestellte Wunschgeschwindigkeit anzeigt, bleibt auch dann (hell) eingeschaltet, wenn der Fahrer mit der Taste 22 die Geschwindigkeitsregelfunktion ganz abschaltet. Wenn der Fahrer dann durch Betätigen der Taste 20 wieder die Stop & Go-Funktion aktiviert, leuchtet die Leuchtdiode 32b schwach auf, um anzuzeigen, daß nicht auf die gesetzte Wunschgeschwindigkeit, sondern auf die Geschwindigkeit von 50 km/h geregelt wird.

Hinsichtlich der Arbeitsweise der Anzeigeeinrichtung im Stop & Go-Modus sind zwei Ausführungsformen denkbar. In einer ersten Ausführungsform leuchtet die Leuchtdiode 32b nur dann auf, wenn die Fahrbahn frei ist, und sie erlischt, wenn ein Zielobjekt verfolgt wird, dessen Geschwindigkeit kleiner als 50 km/h ist. In einer modifizierten Ausführungsform bleibt die Leuchtdiode 32b ständig eingeschaltet, solange die Stop & Go-Funktion aktiv ist. In diesem Fall sind die Informationsgehalte der Leuchtdiode 32b und der voll eingeschalteten Anzeigelampe 26 redundant, und es ist möglich, diese beiden Elemente durch ein einziges Anzeigeelement zu ersetzen. Zur Anzeige der Aktivierbarkeit der Stop & Go-Funktion sollte dieses Anzeigeelement dann einen Zwischenzustand analog zu der Anzeigelampe 26 aufweisen.

## Patentansprüche

1. Geschwindigkeitsregler für Kraftfahrzeuge, mit einem Standardmodus, in dem auf eine vom Fahrer eingestellte Wunschgeschwindigkeit geregelt wird, und mindestens einem Ausnahmemodus, in dem auf eine Sollgeschwindigkeit geregelt wird, die von der Wunschgeschwindigkeit abweichen kann, und mit einer Anzeigeeinrichtung (32, 32a) zur Anzeige der Wunschgeschwindigkeit, wobei eine Zusatzanzeige (32b; 26) anzeigt, daß ein Ausnahmemodus aktiv ist und der Ausnahmemodus ein Stop & Go-Modus ist, in dem das Fahrzeug automatisch in den Stand gebremst wird, wenn ein Abstandssensor (10) ein stehendes Hindernis auf der eigenen Fahrspur feststellt und die Fahrzeuggeschwindigkeit im Stop & Go-Modus nach oben durch eine vorgegebene Grenzgeschwindigkeit (V₂) begrenzt ist, **dadurch gekennzeichnet, dass** die Zusatzanzeige durch eine Signallampe (32b) gebildet wird, die sich im Fahrgeschwindigkeitsanzeiger (28) des Fahrzeugs an der Stelle der Geschwindigkeitsskala befindet, die der Grenzgeschwindigkeit (V₂) entspricht.

2. Geschwindigkeitsregler nach Anspruch 1, **dadurch gekennzeichnet, daß** die Zusatzanzeige eine Anzeigelampe (26) mit drei Zuständen aufweist die dem inaktiven Zustand, dem aktivierbaren Zustand und dem aktiven Zustand der Stop & Go-Funktion entsprechen.

3. Geschwindigkeitsregler nach einem der vorhergehenden Ansprüche, **dadurch gekennzeichnet, daß** die Zusatzanzeige mehrere selektiv einschaltbare Signallampen (32,32b) aufweist, die in die Geschwindigkeitsskala des Fahrgeschwindigkeitsanzeigers (28) des Fahrzeugs integriert sind.

4. Geschwindigkeitsregler nach einem der vorstehenden Ansprüche, **dadurch gekennzeichnet, daß** die Anzeigeeinrichtung zur Anzeige der Wunschgeschwindigkeit durch mehrere Signallampen (32, 32a) gebildet wird, die in die Geschwindigkeitsskala des Fahrgeschwindigkeitsanzeigers (28) des Fahrzeugs integriert sind.

5. Geschwindigkeitsregler nach den Ansprüchen 3 und 4, **dadurch gekennzeichnet, daß** die Anzeigeeinrichtung zur Anzeige der Wunschgeschwindigkeit und die Zusatzanzeige durch dieselben Signallampen (32, 32a, 32b) gebildet werden, die zur Unterscheidung zwischen Sollgeschwindigkeit und Wunschgeschwindigkeit mit unterschiedlicher Helligkeit, blinkend oder nicht blinkend oder mit unterschiedlicher Blinkfrequenz ansteuerbar sind.

## Claims

1. Speed regulator for motor vehicles, having a standard mode in which the speed is regulated to a desired speed set by the driver, and having at least one exception mode in which the speed is regulated to a setpoint speed which can deviate from the desired speed, and having a display device (32, 32a) for displaying the desired speed, with an additional display (32b; 26) indicating that an exception mode is active and the exception mode being a stop & go mode in which the vehicle is braked automatically to a standstill if a distance sensor (10) detects a stationary obstacle on the vehicle's own lane, and the speed of vehicle is limited in the upward direction in the stop & go mode by a predefined speed limit (V₂), **characterized in that** the additional display is formed by a signal lamp (32b) which is located in the travel speed indicator (28) of the vehicle at the location of the speed scale which corresponds to the speed limit (V₂).

2. Speed regulator according to Claim 1, **characterized in that** the additional display has a display lamp (26) with three states which correspond to the inactive state, the activatable state and the active state of the stop & go function.

3. Speed regulator according to one of the preceding claims, **characterized in that** the additional display has a plurality of signal lamps (32, 32b) which can be switched on selectively and which are integrated into the speed scale of the travel speed indicator (28) of the vehicle.

4. Speed regulator according to one of the preceding claims, **characterized in that** the display device for displaying the desired speed is formed by means of a plurality of signal lamps (32, 32a) which are integrated into the speed scale of the travel speed indicator (28) of the vehicle.

5. Speed regulator according to Claims 3 and 4, **characterized in that** the display device for displaying the desired speed and the additional display are formed by the same signal lamps (32, 32a, 32b) which, in order to differentiate between the setpoint speed and desired speed, can be activated with a different level of brightness, in a flashing fashion or non-flashing fashion or with a different flashing frequency.

## Revendications

1. Régulateur de vitesse pour des véhicules automobiles, ayant un mode standard dans lequel on régule à une vitesse souhaitée réglée par le conducteur, et au moins un mode d'exception, dans lequel on régule une vitesse de consigne qui peut s'écarter de la vitesse souhaitée, un système d'affichage (32, 32a) pour l'affichage de la vitesse souhaitée, et avec un affichage supplémentaire (32b ; 26) affichant un mode d'exception actif qui est le mode marche/arrêt dans lequel le véhicule est automatiquement freiné jusqu'à l'arrêt lorsqu'un détecteur de distance (10) constate un obstacle dressé sur sa propre route, la vitesse du véhicule en mode marche/arrêt étant limitée vers le haut par une vitesse limite prédéterminée (V₂),
**caractérisé en ce que**
l'affichage supplémentaire est formé par un voyant de signalisation (32b) du cadran du tachymètre (28) du véhicule à l'endroit de l'échelle de vitesse qui correspond à la vitesse limite (V₂).

2. Régulateur de vitesse selon la revendication 1,
**caractérisé en ce que**
l'affichage supplémentaire comprend un voyant d'affichage (26) à trois états, qui correspondent à l'état inactif, à l'état activable et à l'état actif de la fonction marche/arrêt.

3. Régulateur de vitesse selon l'une quelconque des revendications précédentes,
**caractérisé en ce que**
l'affichage supplémentaire comprend plusieurs voyants de signalisation (32, 32b) connectés sélectivement, et intégrés dans l'échelle de vitesse du cadran du tachymètre (28) du véhicule.

4. Régulateur de vitesse selon l'une quelconque des revendications précédentes,
**caractérisé en ce que**
le système d'affichage pour l'affichage de la vitesse souhaitée est formé par plusieurs voyants de signalisation (32, 32a), qui sont intégrés dans l'échelle de vitesse du cadran du tachymètre (28) du véhicule.

5. Régulateur de vitesse selon les revendications 3 et 4,
**caractérisé en ce que**
le système d'affichage pour l'affichage de la vitesse souhaitée et l'affichage supplémentaire sont formés par les mêmes voyants de signalisation (32, 32a, 32b) qui, pour permettre la distinction entre la vitesse de consigne et la vitesse souhaitée, sont commandés avec une luminosité différente, clignotante ou non, ou avec une fréquence de clignotement différente.
